# EUROPÄISCHE PATENTSCHRIFT

(11) **EP 1 799 400 B1**
(45) Veröffentlichungstag und Bekanntmachung des Hinweises auf die Patenterteilung: **03.09.2008**
(21) Anmeldenummer: 05769704.7
(22) Anmeldetag: 15.07.2005
(51) Int. Cl.: B23P 15/00, F01L 1/344, F01L 1/047, F16H 53/02

(54) **VERFAHREN ZUR HERSTELLUNG EINER NOCKENWELLE**
METHOD FOR PRODUCING A CAMSHAFT
PROCÉDÉ DE FABRICATION D'UN ARBRE À CAMES

(30) Priorität: 13.08.2004 DE 102004039302
(43) Veröffentlichungstag der Anmeldung: 27.06.2007
(73) Patentinhaber: MAHLE Ventiltrieb GmbH, 70376 Stuttgart (DE)
(72) Erfinder: FRITZ, Oliver, 72631 Aichtal (DE); HENTSCHEL, Tilo, 73095 Albershausen (DE); HOFFMANN, Hermann, 70599 Stuttgart (DE); LECHNER, Martin, 51789 Linlar/Frielingsdorg (DE)
(74) Vertreter: Bongen, Renaud & Partner
(86) Internationale Anmeldenummer: PCT/DE2005/001250
(87) Internationale Veröffentlichungsnummer: WO 2006/015570

(56) Entgegenhaltungen:
- EP-A- 0 331 938
- EP-A- 1 362 986
- DE-A1- 3 301 749
- US-A- 4 616 389
- US-A- 5 299 881
- US-A- 5 664 463

## Beschreibung

Die Erfindung betrifft ein Verfahren zur Herstellung einer Nockenwelle nach dem Oberbegriff des Patentanspruchs 1.

Bei der Herstellung derartiger Nockenwellen, bei dem die einzelnen Nocken nach dem Aufsetzen beziehungsweise Fügen nicht mehr nachgearbeitet werden sollen, besteht eine Schwierigkeit darin, die einzelnen Nocken exakt in den vorgegebenen Winkelpositionen fügen zu können. Aufgrund dieser Schwierigkeit muss nach dem Fügen der einzelnen Nocken stets noch eine Nachbearbeitung durch Schleifen der Nockenkonturen erfolgen oder die Toleranzgrenzen der Nockenpositionen werden durch den Fügeprozess bestimmt.

Aus US 5,664,463 A ist ein Verfahren zur Herstellung einer Nockenwelle bekannt, bei dem mindestens zwei fertig bearbeitete, einzelne Nocken in vorgegebenen Winkelpositionen auf eine Welle fest aufgesetzt werden, wobei die Welle insbesondere aus einer Außenwelle und einer koaxial in dieser angeordneten Innenwelle bestehen kann. Dieses Dokument bildet den nächstliegenden Stand der Technik.

In EP 0 331 938 A ist beschrieben, dass eine Nachbearbeitung der Konturen einzelner Nocken an einer fertig gefügten Nockenwelle vermieden werden kann, wenn die Nocken exakt bei der Montage positioniert werden. Bei den betreffenden Nocken handelt es sich jeweils um einzelne Nocken die jeweils für sich als einzelne Nocken bearbeitet werden sollen.

In US 4,616,389 A ist ein Verfahren zur Herstellung einer Nockenwelle beschrieben, bei der Nocken auf einer Montagewelle in einer der endgültigen Zuordnung auf der Nockenwelle entsprechenden Anordnung ausgerichtet werden. Nach einer Entfernung der Montagewelle werden die ausgerichteten Nocken mittels einer anderen Vorrichtung zur Bearbeitung ihrer Bohrungen gespannt. Die fertig bearbeiteten Nocken werden mit einer zugehörigen Welle zu der herzustellenden Nockenwelle gefügt und zwar durch ein Aufschrumpfen der Nocken auf die Welle.

Nach US 5,299,881 A können die Nocken als ein Modul geschliffen werden. Die geschliffenen Nocken werden jeweils einzeln auf eine Welle zur Erzeugung einer Nockenwelle aufgeschoben.

Die Erfindung beschäftigt sich mit dem Problem, bei einem gattungsgemäßen Herstellungsverfahren von Nockenwellen auf eine Nachbearbeitung der Konturen der einzelnen Nocken an der fertig gefügten Nockenwelle verzichten zu können.

Gelöst wird dieses Problem bei einem gattungsgemäßen Herstellungsverfahren bereits in erster Linie durch die Verfahrensschritte nach den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, die einzelnen Nocken bereits vor dem Aufsetzen auf eine Welle und Verbinden mit dieser Welle zu einem Bearbeitungsmodul in derjenigen gegenseitigen Zuordnung zusammenzufassen, in der die Nocken auf der fertigen Nockenwelle liegen sollen. Innerhalb dieses Bearbeitungsmoduls wird die Fertigbearbeitung der Nocken durchgeführt. Derart fertigbearbeitet werden die Nocken innerhalb des Bearbeitungsmoduls auf die Welle der Nockenwelle gefügt. Dadurch ist sichergestellt, dass die gewünschte gegenseitige Zuordnung gegeben ist, das heißt, dass eine Nachbearbeitung unnötig ist.

Sind lediglich zwei Nocken in einer gegenseitigen, fest vorgegebenen Zuordnung auf einer Welle zu fügen, so besteht ein entsprechendes Bearbeitungsmodul lediglich aus diesen beiden Nocken und gegebenenfalls zwischen diesen angeordneten axialen Abstandshaltern.

Als Mittel für eine Verbindung der einzelnen Elemente in einem Bearbeitungsmodul können Schrauben für ein axiales Verspannen der einzelnen Elemente untereinander eingesetzt werden oder nach dem Einsetzen von Passstiften als Spannmittel bei der Bearbeitung und beim Fügen dienen. Die Schrauben können dabei die Form von Senkschrauben besitzen. Anstelle der Schrauben als Spannmittel können bei der Verwendung von Passstiften beliebige andere Spannmittel, wie beispielsweise allgemein bekannte Spannmittel beim Schleifen verwendet werden.

Besonders vorteilhaft lässt sich mit dem erfindungsgemäßen Verfahren eine Nockenwelle mit variabel gegeneinander verdrehbaren Nocken herstellen. Bei einer solchen, beispielsweise aus EP 1 362 986 A1 bekannten Nockenwelle ist eine Innenwelle konzentrisch in einer Außenwelle gelagert, wobei die beiden Wellen relativ zueinander verdrehbar sind. Dabei sind mit der Außenwelle erste Nocken und mit der Innenwelle zweite Nocken jeweils fest verbunden. Fest verbunden sind die zweiten Nocken mit der Innenwelle, beispielsweise durch diese Nocken jeweils radial durchdringende, die Außenwelle durch eine dort vorgesehene Ausnehmung durchgreifende, in der Innenwelle fixierte Verbindungselemente, wie beispielsweise Passstifte. Solche zweite Nocken sind auf der Außenwelle drehbar gelagert. Weil bei derartigen Nockenwellen eine nachträgliche mechanische Bearbeitung der - teilweise gegeneinander verstellbaren - bereits fertig gefügten Nocken schwierig ist, erweist sich das erfindungsgemäße Verfahren hierfür als ganz besonders vorteilhaft.

Befindet sich in einem Bearbeitungsmodul ein zweiter Nocken, der für eine verstellbare Nockenwelle mit einer radialen Bohrung zur Aufnahme eines Befestigungselementes, beispielsweise eines Passstiftes versehen werden muss, um dadurch innerhalb der fertigen Nockenwelle positioniert und verdreht werden zu können, so kann diese Bohrung hergestellt werden, während sich der betreffende zweite Nocken in dem Bearbeitungsmodul befindet. Hierdurch ist eine passgenaue Winkellage des betreffenden zweiten Nockens innerhalb der fertigen Nockenwelle gewährleistet.

Vorteilhafte, nachstehend noch näher erläuterte Ausführungsbeispiele sind in der Zeichnung dargestellt.

In dieser zeigen:

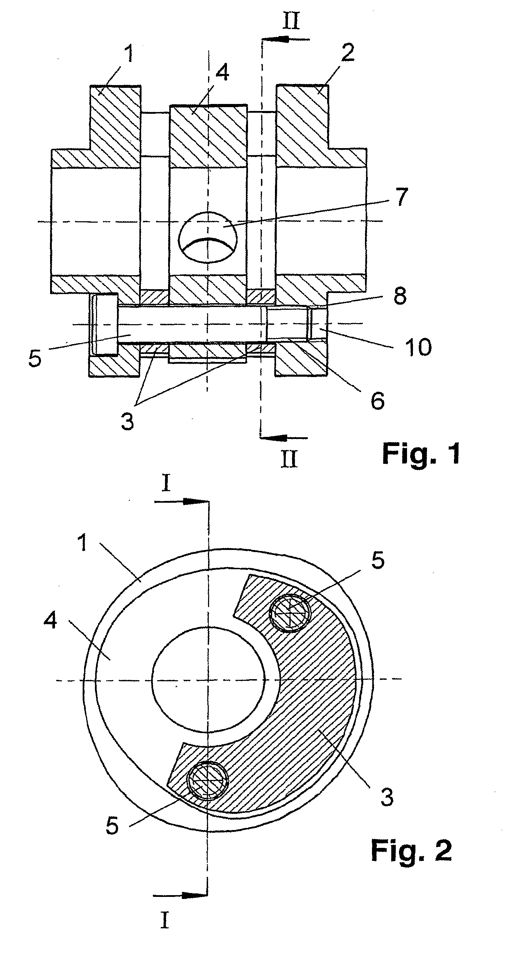

- Fig. 1: einen Längsschnitt nach Linie I-I in Fig. 2 durch ein Bearbeitungsmodul mit insgesamt drei Nocken,
- Fig. 2: einen Radialschnitt des Bearbeitungsmoduls nach Linie II-II in Fig. 1,
- Fig. 3: einen Längsschnitt eines Bearbeitungsmoduls nach Linie III-III in Fig. 4 mit einer gegenüber der Ausführung nach Fig. 1, 2 alternativen Art der Verschraubung,
- Fig. 4: einen Radialschnitt nach Linie IV-IV des Bearbeitungsmoduls in Fig. 3,
- Fig. 5: einen Längsschnitt des Bearbeitungsmoduls nach Linie V-V in Fig. 4,
- Fig. 6: einen Längsschnitt durch eine fertig gefügte, verstellbare Nockenwelle mit einer Innen- und einer Außenwelle.

In einem Bearbeitungsmodul sind miteinander verbunden zwei erste Nocken 1, 2, die jeweils an den axial äußeren Enden liegen. Zwischen diesen beiden ersten Nocken 1, 2 befindet sich jeweils über umfangsmäßig offene Abstandshalter 3 axial beabstandet in der Mitte des Bearbeitungsmoduls ein zweiter Nocken 4.

Die insgesamt drei ersten und zweiten Nocken 1, 2, 4 sind über zwei umfangsmäßig etwa gegenüberliegende Schrauben 5 miteinander verbunden. Die beiden Schrauben 5 sind vorzugsweise als Senkschrauben ausgebildet.

Die derart in dem Bearbeitungsmodul fest miteinander verbundenen Nocken 1, 2, 4 können in diesem Zustand fertig bearbeitet werden, und zwar insbesondere bezüglich ihrer Nockenaußenkonturen sowie ihrer Innendurchmesser.

Vorzugsweise werden die Innendurchmesser für alle Nocken 1, 2, 4 gleich gewählt, um die Bearbeitung zu vereinfachen.

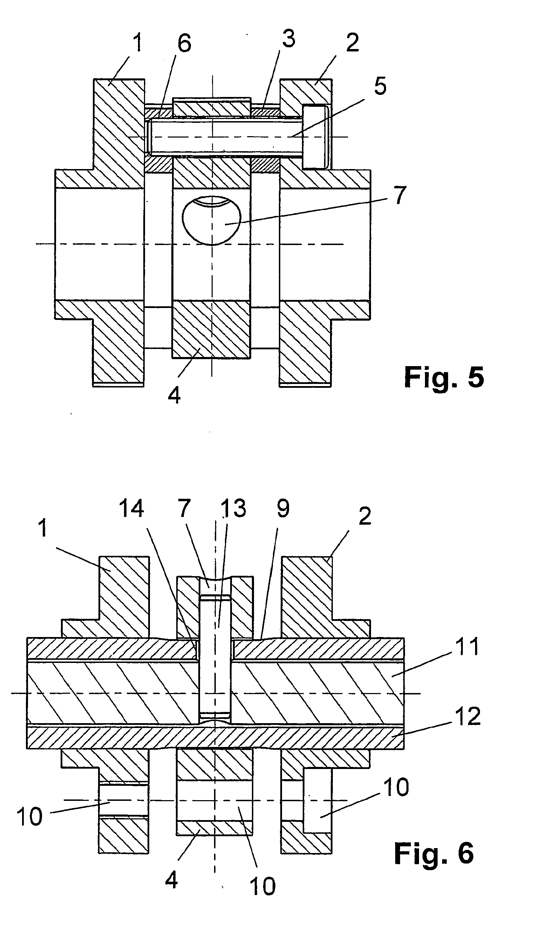

Bei dem gezeichneten Ausführungsbeispiel handelt es sich um Nocken 1, 2, 4 für eine Nockenwelle mit bezüglich ihrer Winkellage variabel gegeneinander verstellbaren Nocken. Die zu den Nocken 1, 2, 4 zugehörige Welle setzt sich zusammen aus einer Innenwelle 11 und einer diese konzentrisch umschließenden Außenwelle 12 (Fig. 6). Dabei sind die beiden Wellen 11, 12 relativ zueinander verdrehbar. Die Relativverdrehung erfolgt in der Regel dadurch, dass die Innenwelle 11 in der Außenwelle 12 verdreht wird. Die beiden in dem Bearbeitungsmodul axial außen liegenden ersten Nocken 1, 2 sind für einen festen Sitz auf der Außenwelle 12 bestimmt. Der zwischen diesen beiden Nocken 1, 2 liegende zweite Nocken 4 ist für eine feste Verbindung an der Innenwelle 11 ausgelegt. Bei der festen Verbindung mit der Innenwelle ist der zweite Nocken 4 mit einem Innendurchmesser versehen, der eine drehbare, spielfreie Lagerung des zweiten Nockens 4 auf der Außenwelle 12 ermöglicht (Fig. 6). Die Verbindung des zweiten Nockens 4 mit der Innenwelle 11 erfolgt durch ein Befestigungselement, das ein Passstift 13 sein kann. Dieser Passstift 13 ist einerseits in der Passbohrung 7 des zweiten Nockens 4 und andererseits in einer Bohrung der Innenwelle 11 fixiert und durch eine langlochartige Ausnehmung 14 in der Außenwelle 12 hindurchgeführt. Die Passbohrung 7 des zweiten Nockens 4 wird erzeugt, während sich dieser zweite Nocken 4 in dem geschlossenen Bearbeitungsmodul befindet.

Die Nocken 1, 2, 4 sind bis auf die Bearbeitungsvorgänge, die an ihnen noch innerhalb des Bearbeitungsmoduls vorgenommen werden, bereits vorher endbearbeitet.

Nach dem Aufsetzen des Bearbeitungsmoduls auf die Außenwelle 12 der in dem Ausführungsbeispiel als verstellbare Nockenwelle wiedergegebenen Nockenwelle (Fig. 6), das heißt nach Beendigung und Vorliegen einer beispielsweise Schrumpfverbindung zwischen den ersten Nocken 1, 2 mit der Außenwelle 12 wird das Bearbeitungsmodul geöffnet, und die Schrauben 5 und die umfangsmäßig offenen Abstandshalter 3 werden entfernt. Die in den Nocken 1, 2, 4 verbleibenden Bohrungen 10 führen zwangsläufig zu dem Vorteil einer Gewichtsreduzierung bei den diese Bohrungen 10 aufweisenden Nocken.

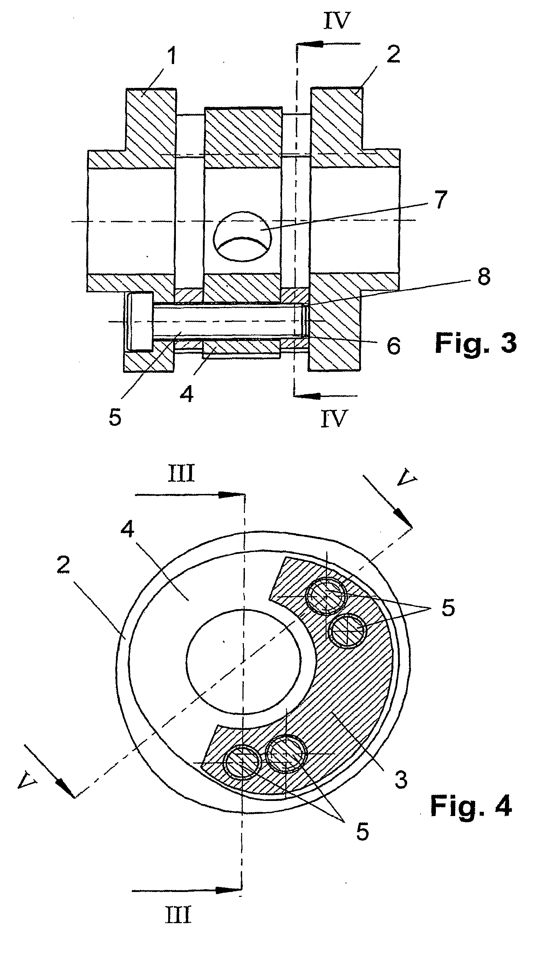

Zur Aufnahme der als Verbindungsmittel in einem Bearbeitungsmodul eingesetzten Schrauben 5 können vorteilhafter Weise in gegebenenfalls vorhandenen Abstandshaltern 3 Gewinde 8 eingebracht sein (Fig. 3 bis 5). Bei einer solchen Ausführung müssen mindestens jeweils zwei Schrauben 5 axial bezüglich ihrer Kopf- und Gewindelage entgegengerichtet eingesetzt sein, um eine spielfreie und lösbare Zuordnung zu den Nocken 1, 2, 4 zu gewährleisten (Fig. 3 bis 5). Dementsprechend müssen die Abstandshalter 3 mindestens vier Bohrungen 10 aufweisen, von denen jeweils zwei als Durchgangsbohrung und zwei als Gewinde 8 ausgebildet sind. Der Vorteil dieser Verbindungsart innerhalb des Bearbeitungsmoduls besteht erstens aus einer Wiederverwendungsmöglichkeit der gewindebeaufschlagten und damit teuren Abstandshalter 3 und zweitens in einer einfacheren Bearbeitbarkeit sämtlicher Nocken 1, 2, 4.

Damit ein verstellbarer, zweiter Nocken 4 in dem Bearbeitungsmodul auf einen mit den übrigen ersten Nocken 1, 2 gleichen Innendurchmesser bearbeitet werden kann, muss die Außenwelle 12 in demjenigen Bereich, in dem der zweite Nocken 4 zu liegen kommt, eine Ausnehmung 9 mit einem reduzierten Durchmesser besitzen (Fig. 6). Reduziert wird der Außendurchmesser der Außenwelle 12 in einem solchen Maße, dass der zweite Nocken 4 spielfrei in diesem Bereich auf der Außenwelle 12 verdrehbar lagern kann.

Unter radialer Umfangsfläche der Nocken 1, 2, 4 sind deren Innenflächen und die konzentrischen Außenflächen bzw. Nockenflächen zu verstehen. Besonders wichtig mit Bezug auf eine Bearbeitung innerhalb des Bearbeitungsmoduls sind die Nockenkonturen.

Bei der in Fig. 6 gezeichneten fertigen, verstellbaren Nockenwelle mit einer Innenwelle 11 und einer Außenwelle 12 sind die ersten Nocken 1, 2 fest auf die Außenwelle 12 aufgeschrumpft. Der zwischen diesen beiden ersten Nocken 1, 2 liegende, gegenüber diesen verdrehbare zweite Nocken 4 ist über einen Passstift 13 fest mit der Innenwelle 11 verbunden. Damit eine Relativverdrehung zwischen Innen- und Außenwelle 11, 12 möglich ist, durchgreift der Passstift 13 in der Außenwelle eine in Umfangsrichtung langlochartige Ausnehmung 14.

## Patentansprüche

1. Verfahren zur Herstellung einer Nockenwelle, bei dem mindestens zwei fertig bearbeitete einzelne Nocken (1, 2, 4) in vorgegebenen Winkelpositionen auf eine Welle fest aufgesetzt werden, wobei die Welle insbesondere aus einer Außenwelle (12) und einer konzentrisch in dieser angeordneten Innenwelle (11) bestehen kann,
**gekennzeichnet durch** folgeende, in zeitlicher Folge vorzunehmende Fertigungsschritte,
- die mindestens zwei fest auf die Welle (11; 12) aufzusetzenden Nocken (1, 2, 4) werden vor dem Aufsetzen lösbar zu einem Bearbeitungsmodul zusammengefasst, wobei erste Nocken (1, 2), die auf der fertigen Nockenwelle gegeneinander unbeweglich sind, in einer der endgültigen Zuordnung auf der Welle (11; 12) entsprechenden Anordnung ausgerichtet werden,
- innerhalb des Bearbeitungsmoduls werden von den radialen Umfangsflächen der Nocken zumindest die Nockenkonturen der mindestens zwei Nocken (1, 2, 4) fertig bearbeitet,
- die fertig bearbeiteten Nocken (1, 2, 4) werden innerhalb des Bearbeitungsmoduls liegend auf die Welle (11; 12) aufgesetzt,
- die auf der fertigen Nockenwelle gegeneinander unbeweglichen ersten Nocken (1, 2) werden in ihrer innerhalb des Bearbeitungsmoduls zumindest bezüglich ihrer Winkellage festgelegten Zuordnung fest mit der Welle (11; 12) verbunden,
- die lösbare Zusammenfassung der Nocken (1, 2, 4) innerhalb des Bearbeitungsmoduls wird aufgetrennt, wobei gegebenenfalls eingesetzte Positionier- und/oder Verbindungs-Hilfsmittel (3, 5) entfernt werden.

2. Verfahren zur Herstellung einer Nockenwelle, bei der die aufzusetzenden Nocken (1, 2, 4) axial voneinander beabstandet sind, nach Anspruch 1,
**dadurch gekennzeichnet,**
**dass** solche axiale Abstände in dem Bearbeitungsmodul durch dort eingesetzte Abstandshalter (3) eingestellt werden.

3. Verfahren nach Anspruch 1 oder 2,
**dadurch gekennzeichnet,**
**dass** eingesetzte Abstandshalter (3) als umfangsmäßig offene Bauteile mit einer Öffnung versehen sind, die größer als der zugeordnete Außendurchmesser der von den Nocken belegten Welle ist, wobei dies bei einer aus einer Innen- und Außenwelle (11; 12) zusammengesetzten Welle bezüglich des Außendurchmessers der Außenwelle (12) gilt.

4. Verfahren nach einem der vorhergehenden Ansprüche, bei dem einer der Nocken (1, 2, 4), nämlich ein zweiter Nocken (4), eine radiale Passbohrung (7) zur Aufnahme eines diesen zweiten Nocken (4) auf der Innenwelle (12) fixierenden Befestigungselements (13) besitzt,
**dadurch gekennzeichnet,**
**dass** die Passbohrung (7) erzeugt wird, während sich der betreffende zweite Nocken (4) innerhalb des Bearbeitungsmoduls befindet.

5. Verfahren nach einem der vorhergehenden Ansprüche,
**dadurch gekennzeichnet,**
**dass** als Mittel zur Erzeugung der lösbaren Zusammenfassung die Nocken (1, 2, 4) axial durchdringende Schrauben (5) dienen.

6. Verfahren nach einem der vorhergehenden Ansprüche,
**dadurch gekennzeichnet,**
**dass** über dem Umfang der Nocken (1, 2, 4) verteilt mindestens zwei Schrauben (5) vorgesehen sind.

7. Verfahren nach einem der vorhergehenden Ansprüche, **gekennzeichnet durch** die Merkmale,
- ein Gewinde (6) einer Schraube (5) greift in ein Gegengewinde ein, das in einem von dem Schraubenkopf entfernt liegenden Abstandshalter (3) vorgesehen ist,
- mindestens jeweils zwei Schrauben (5) sind axial bezüglich ihrer Kopf- und Gewindelage entgegengerichtet eingesetzt.

8. Verfahren nach einem der vorhergehenden Ansprüche,
**dadurch gekennzeichnet,**
**dass** Axial-Passstifte innerhalb des Bearbeitungsmoduls als Positioniermittel eingesetzt werden.

9. Verfahren nach einem der Ansprüche 1 bis 7,
**dadurch gekennzeichnet,**
**dass** die Schrauben (5) als Passschrauben ausgebildet sind.

10. Verfahren nach einem der vorhergehenden Ansprüche zur Herstellung einer Nockenwelle, bei der die Welle, auf die die Nocken (1, 2, 4) aufgesetzt werden, aus zwei konzentrisch ineinander liegenden, relativ zueinander verstellbaren Wellen bestehen, nämlich einer Innen- und Außenwelle (11, 12) und erste Nocken (1, 2) mit der Außenwelle (12) und zweite Nocken (4) über radiale, die Außenwelle (11) durchgreifende Verbindungselemente (13) mit der Innenwelle (11) jeweils fest verbunden sind,
**dadurch gekennzeichnet,**
**dass**
- die Bearbeitung der radialen Innenflächen für alle Nocken (1, 2, 4) auf den gleichen Durchmesser erfolgt und
- auf der Außenwelle (12) eine Ausnehmung (9) mit einen reduzierten Durchmesser zur Aufnahme des zweiten Nockens (4) vorgesehen ist, wobei die Reduzierung um ein Maß erfolgt, das eine spielfreie Verdrehung des zweiten Nockens (4) auf der Außenwelle (12) gewährleistet.

## Claims

1. A method for manufacturing a camshaft in which at least two completely machined individual cams (1, 2, 4) are fixedly mounted on a shaft in predetermined angular positions, whereby the shaft may consist in particular of an outside shaft (12) and an inside shaft (11) arranged concentrically inside the former,
**characterized by** the following manufacturing steps, to be performed in chronological order:
- the at least two cams (1, 2, 4) to be detachably mounted on the shaft (11; 12) are combined to form a machining module before being mounted on the shaft, whereby the first cams (1, 2) which are immovable with respect to one another on the finished camshaft are aligned in an arrangement corresponding to the final arrangement on the shaft (11; 12),
- at least the cam contours of the at least two cams (1, 2, 4) are completely machined within the machining module from the radial peripheral surfaces of the cams,
- the completely machined cams (1, 2, 4) are mounted on the shaft (11; 12) within the machining module,
- the first cams (1, 2) which are immovable with respect to one another on the finished camshaft are fixedly connected to the shaft (11; 12) in their arrangement within the machining module that is fixedly defined at least with regard to their angular position,
- the detachable joining of the cams (1, 2, 4) within the machining module is separated, whereupon positioning means and/or auxiliary connecting means (3, 5) that may optionally be used within the machining module are removed.

2. The method for manufacturing a camshaft on which the cams (1, 2, 4) to be mounted are spaced an axial distance apart, according to Claim 1,
**characterized in that**
such axial spacings in the machining module are set by the spacers (3) used there.

3. The method according to Claim 1 or 2,
**characterized in that**
the spacers (3) as components that are open at the circumference are provided with an opening larger than the respective outside diameter of the shaft occupied by the cams, whereby this is true with regard to the outside diameter of the outside shaft (12) in the case of a shaft composed of an inside shaft (11) and an outside shaft (12).

4. The method according to any one of the preceding claims, in which one of the cams (1, 2, 4), namely a second cam (4) has a radial fitting borehole (7) to receive a fastening element (13) which secures this second cam (4) on the inside shaft (12),
**characterized in that**
the fitting borehole (7) is created while the respective second cam (4) is within the machining module.

5. The method according to any one of the preceding claims, **characterized in that** screws (5) which pass axially through the cams (1, 2, 4) serve as the means for producing the detachable joining.

6. The method according to any one of the preceding claims, **characterized in that** at least two screws (5) are distributed over the circumference of the cams (1, 2, 4).

7. The method according to any one of the preceding claims,
**characterized by** the features
- a thread (6) of a screw (5) engages in a mating thread which is provided in a spacer (3) situated at a distance from the screw head,
- at least two screws (5) are inserted in opposite directions axially with regard to the position of their heads and threads.

8. The method according to any one of the preceding claims,
**characterized in that**
axial dowel pins are used as positioning means inside the machining module.

9. The method according to any one of Claims 1 through 7,
**characterized in that**
the screws (5) are designed as fitting screws.

10. The method according to any one of the preceding claims for manufacturing a camshaft in which the shaft on which the cams (1, 2, 4) are mounted is made of two shafts that are adjustable in relation to one another and are situated concentrically one inside the other, namely an inside shaft (11) and an outside shaft (12) and first cams (1, 2) are fixedly connected to the outside shaft (12) and second cams (4) are fixedly connected to the inside shaft (11) via radial connecting elements (13) which pass through the outside shaft (12),
**characterized in that**
- the machining of the radial inside surfaces for all cams (1, 2, 4) is performed for all cams to the same diameter and
- a recess (9) having a reduced diameter is provided on the outside shaft (12) for receiving the second cam (4), whereby the reduction is of such an extent that play-free rotation of the second cam (4) on the outside shaft (12) is ensured.

## Revendications

1. Procédé de fabrication d'un arbre à cames, dans lequel au moins deux cames individuelles (1,2,4) ayant subi un usinage final sont fixement enfoncées sur un arbre à des positions angulaires prescrites, moyennant quoi l'arbre peut notamment être constitué d'un arbre extérieur (12) et d'un arbre intérieur (11) disposé concentriquement dans celui-ci,
**caractérisé par** les étapes de fabrication suivantes, à entreprendre successivement dans le temps,
- les au moins deux cames (1,2,4) à enfoncer fixement sur l'arbre (11 ;12) sont assemblées avant d'être enfoncées en un module d'usinage pouvant être désassemblé, moyennant quoi les premières cames (1,2), qui sont immobiles l'une contre l'autre sur l'arbre à cames fini, sont orientées dans un agencement correspondant à l'affectation finale sur l'arbre (11 ;12),
- à l'intérieur du module d'usinage, au moins les contours de cames des au moins deux cames (1,2,4) sont sujettes à un usinage final par les surface circonférentielles radiales des cames,
- les cames (1,2,4) ayant subi un usinage final sont enfoncées à l'intérieur du module d'usinage de manière à reposer sur l'arbre (11 ;12),
- les premières cames (1,2) immobiles l'une contre l'autre sur l'arbre à cames fini sont reliées fixement à l'arbre (11,12) dans leur affectation déterminée à l'intérieur du module d'usinage au moins en ce qui concerne leur position angulaire,
- l'assemblage libérable des cames (1,2,4) à l'intérieur du module d'usinage est désassemblé, moyennant quoi le cas échéant des moyens auxiliaires de positionnement et/ou de liaison (3,5) montés sont retirés.

2. Procédé de fabrication d'un arbre à cames, dans lequel les cames (1,2,4) à enfoncer sont espacées axialement les unes des autres, selon la revendication 1,
**caractérisé en ce que**
de tels espacements axiaux dans le module d'usinage sont réglés par des entretoises d'écartement (3) qui y sont placées.

3. Procédé selon la revendication 1 ou 2,
**caractérisé en ce que**
les entretoises d'écartement (3) placées sont en tant que composants ouverts circonférentiellement pourvues d'une ouverture, qui est plus grande que le diamètre externe coordonné de l'arbre équipé des cames, moyennant quoi ceci vaut aussi pour un arbre composé d'un arbre interne et d'un arbre externe (11 ;12) en ce qui concerne le diamètre externe de l'arbre externe (12).

4. Procédé selon une des revendications précédentes, dans lequel une des cames (1,2,4), à savoir une deuxième came (4), possède un alésage d'ajustement radial (7) pour recevoir un élément de fixation (13) fixant cette deuxième came (4) sur l'arbre interne (12),
**caractérisé en ce que**
l'alésage d'ajustement (7) est produit, pendant que la deuxième came (4) concernée se trouve à l'intérieur du module d'usinage.

5. Procédé selon une des revendications précédentes,
**caractérisé en ce que**
des vis (5) traversantes axialement servent de moyen pour réaliser l'assemblage libérable des cames (1,2,4).

6. Procédé selon une des revendications précédentes,
**caractérisé en ce que**
au moins deux vis (5) réparties sur la circonférence des cames (1,2,4) sont prévues.

7. Procédé selon une des revendications précédentes, **caractérisé par** les caractéristiques,
- un filetage (6) d'une vis (5) s'engage dans un filetage inverse, qui est prévu dans une entretoise d'écartement (3) située à distance de la tête de vis,
- au moins deux vis (5) respectives sont placées axialement en sens inverse en ce qui concerne leur position de tête et de filetage.

8. Procédé selon une des revendications précédentes,
**caractérisé en ce que**
des goupilles d'ajustement axial sont placées à l'intérieur du module d'usinage comme moyens de positionnement.

9. Procédé selon une des revendications 1 à 7,
**caractérisé en ce que** les vis (5) sont conçues comme des vis d'ajustement.

10. Procédé selon une des revendications précédentes de fabrication d'un arbre à cames, dans lequel l'arbre, sur lequel les cames (1,2,4) sont enfoncées, est constitué de deux arbres situés concentriquement l'un dans l'autre, déplaçables relativement l'un par rapport à l'autre, à savoir un arbre interne et un arbre externe (11,12) et les premières cames (1,2) sont reliées fixement à l'arbre externe (12) et la deuxième came (4) est reliée fixement à l'arbre interne (11) par l'intermédiaire d'éléments de liaison (13) radiaux, traversant l'arbre externe (11),
**caractérisé en ce que**
- l'usinage des surfaces internes radiales de toutes les cames (1,2,4) s'effectue au même diamètre et
- sur l'arbre externe (12), un évidement (9) ayant un diamètre réduit pour recevoir la deuxième came (4) est prévu, moyennant quoi la réduction s'effectue dans une proportion, qui garantit une torsion exempte de jeu de la deuxième came (4) sur l'arbre externe (12).
